# EUROPEAN PATENT SPECIFICATION

(11) **EP 2 640 529 B1**
(45) Date of publication and mention of the grant of the patent: **30.12.2015**
(21) Application number: 11781640.5
(22) Date of filing: 17.10.2011
(51) Int. Cl.: B07B 1/46, F16B 7/18

(54) **SECTIONAL AND MODULAR FRAME FOR VIBRATING SCREENS**
AUS ABSCHNITTEN UND MODULEN AUFGEBAUTER RAHMEN FÜR SCHWINGSIEBE
CADRE MODULABLE CONSTITUE DE DIFFERENTS SECTIONS POUR DES TAMIS VIBRANTS

(30) Priority: 16.11.2010 IT PD20100342
(43) Date of publication of application: 25.09.2013
(73) Proprietor: Omas S.r.l., 35010 S.Giorgio delle Pertiche (PD) (IT)
(72) Inventor: NALON, Adriano, I-35010 S.Giorgio delle Pertiche (PD) (IT)
(74) Representative: Vinci, Marcello
(86) International application number: PCT/IB2011/054596
(87) International publication number: WO 2012/066435

(56) References cited:
- WO-A1-98/07529
- DE-A1- 3 516 790
- DE-A1-102007 004 150
- DE-A1-102007 010 118
- DE-B3- 10 330 784
- DE-U1-202006 011 973
- FR-A1- 2 904 088
- US-A- 5 755 334

## Description

The present invention concerns the field of flour vibrating sieves and in particular it concerns a new sectional and modular frame for vibrating sieves.

Systems for sieving flour are known, which are suited to sort flour in fractions having different particle size and to prevent the formation of clots.

Vibrating sieves are known which comprise a frame for supporting a plurality of sieves placed on top of one another, wherein the sieves in higher position have larger meshes than the sieves in lower position.

Said frame is constituted by section bars rigidly constrained to one another and is connected to moving devices that produce a vibrating motion of the frame, and thus of the sieves, on the horizontal plane.

The frame is suspended from a rigid bearing structure by means of glass fibre or natural fibre rods that insulate the bearing structure from the vibrations produced by the machine.

Said frame is commonly made of metal section bars constrained to one another at the head by welding, wherein, however, the welds may break due to the stress exerted on them during the continuous operation of the machine.

Vibrating sieves are known which are provided with a sectional frame made up of tubular metal bars with substantially square cross section, provided with projecting partitions for the insertion of the panels forming the walls of the vibrating sieve.

Two or more metal section bars are joined by means of shaped joints with two or more pins suited to be housed in the bar heads.

Each joint comprises two or three or four of said pins arranged so as to mutually form angles, for example 90° angles, in the three spatial directions, in order to constrain two, three or four section bars to one another.

DE 10 2007 010118 relates to a frame with profiled bars provided with four longitudinal trapezoidal grooves for the insertion of inserts for the connection of the bars.

DE 35 16 790 relates to a frame comprising profiled bars variously assembled by connection elements.

FR 2 904 088 relates to an assembly device for profiled bars, comprising T-slots.

The drawback of this type of system lies in that to join two or more section bars it is necessary to choose among various types of joints, depending on the number and arrangement of the section bars to be joined and the panels to be constrained. The object of the present patent is a new modular frame for vibrating sieves with sectional and modular section bars suited to be joined without welds.

The object of the present invention is to provide a frame for vibrating sieves without welds.

Another object of the present invention is to provide a modular frame, where different section bars can be used and assembled in different ways according to the structural needs.

It is another object of the present invention to reduce assembly and installation times.

These and other direct and complementary objects are achieved by the frame as defined in claim 1.

The modular frame for vibrating sieves with sectional and modular section bars can be assembled without welds, and mainly includes:
- a plurality of linear hollow bars with shaped cross section, featuring linear seats or cavities within said cross section;
- a plurality of connection elements for coupling together the ends of each bar and one or more bars of the same or a different type without welds.

The new frame also comprises panels for making the external walls and/or the inner partitions, as described and claimed below.

A frame for vibrating sieves according to the preamble of claim 1 is, for example, disclosed in DE 10 2007 004 150 A1.

In particular, said linear hollow bars are preferably made of anodized aluminium, and are substantially available in five types that can be distinguished according to the shape of their cross section:
a. square cross section;
b. rectangular cross section;
c. T-shaped cross section;
d. L-shaped cross section;
e. square cross section with a projecting and thicker side.

Each one of said section bars comprises at least one of said linear seats or cavities that develop along the length of the section bar and are recessed within its cross section.

Said seats or cavities, open along one side of the section bar, can be of two types:
a. in the shape of a simple rectangle or square, so as to house the edge of one of said panels;
b. in the shape of a trapezium, so as to house threaded inserts suited to join two or more bars.

Therefore, with said types of bar it is possible to create, in a simple and modular manner, a wide range of frames that are obtained by simply cutting said bars to size and joining them to one another at the ends, using steel screws and bars that fit in the cavities of each profile, thus eliminating any type of weld and drastically reducing assembly times.

The characteristics of the new frame will be highlighted in greater detail in the following description, with reference to the drawings attached as non-limiting examples.

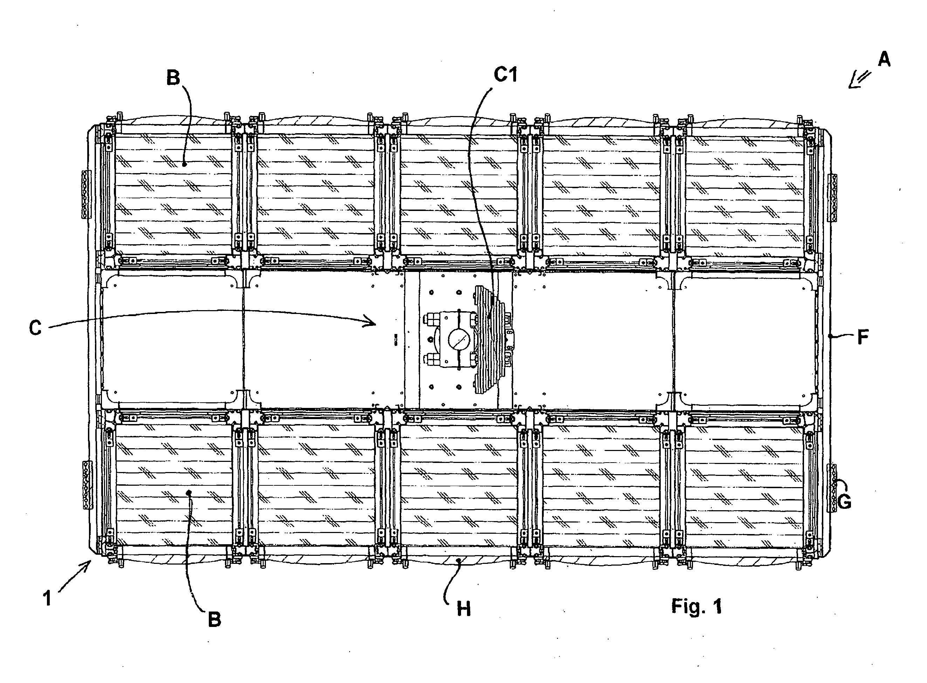

Figure 1 shows an elevation view of a vibrating sieve (A) with a new frame (1).
Figure 2 shows a three-dimensional view of a part of the frame (1), while Figure 3 shows a cross-section view of a part of the frame (1), and Figures 3a and 3b show two details of the same.
Figure 4 shows a plan view of a part of the frame (1).
Figures 5, 6, 7 and 8 show examples of embodiment of the cross section of the bars (2) making up the frame (1).
Figure 9 shows in detail part of the cross section of a bar (2) where it is possible to observe the recessed seat (21) for the insertion of a threaded fixing insert (31).

The new modular frame (1) comprises a plurality of linear hollow bars (2) with shaped cross section featuring linear seats or cavities (21, 23) that develop along the length of the bar (2), recessed within the cross section of the bar (2) and open along one side of the bar.

Said bars (2) are joined and rigidly constrained to one another in such a way as to form a substantially parallelepiped three-dimensional structure, with closing panels (D, E) making up the walls.

In particular, said linear bars (2) have, in cross section, at least four sides, wherein one or more of said sides is/are provided with one or more of said seats (21, 23) for coupling the bar (2) with other bars (2) or panels (D, E).

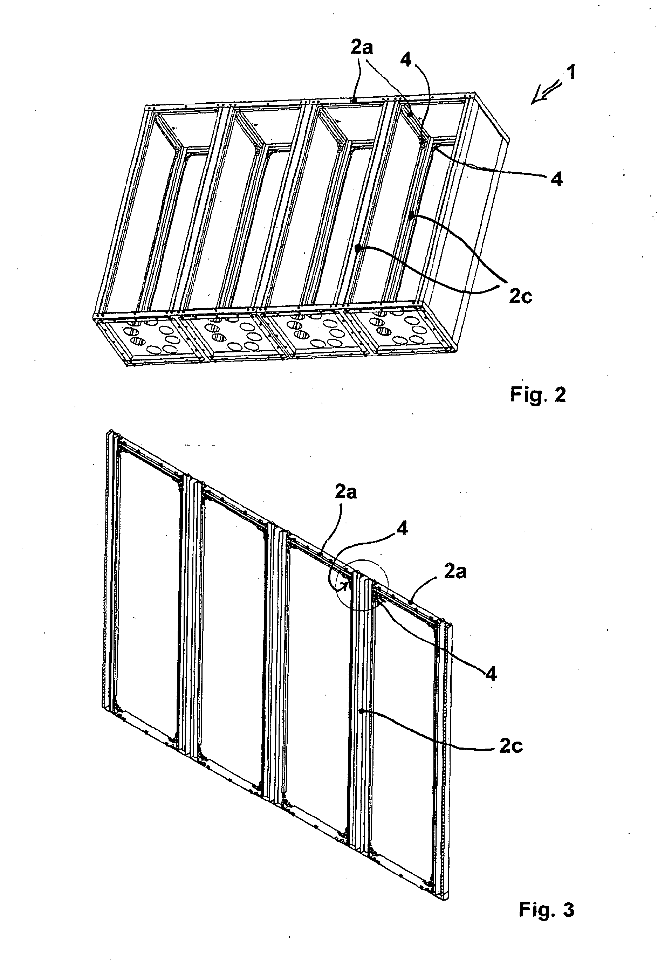

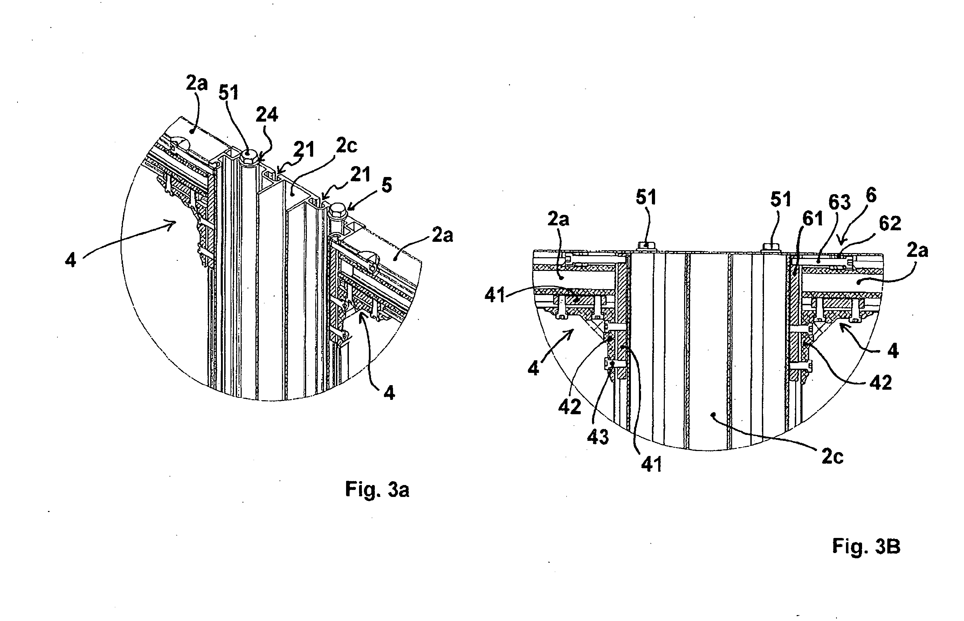

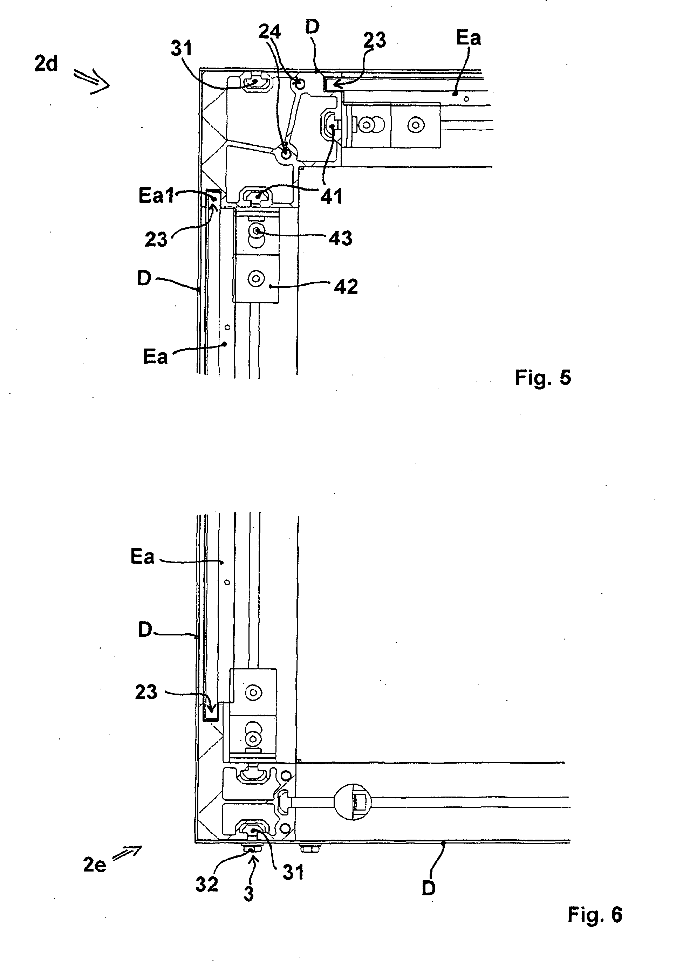

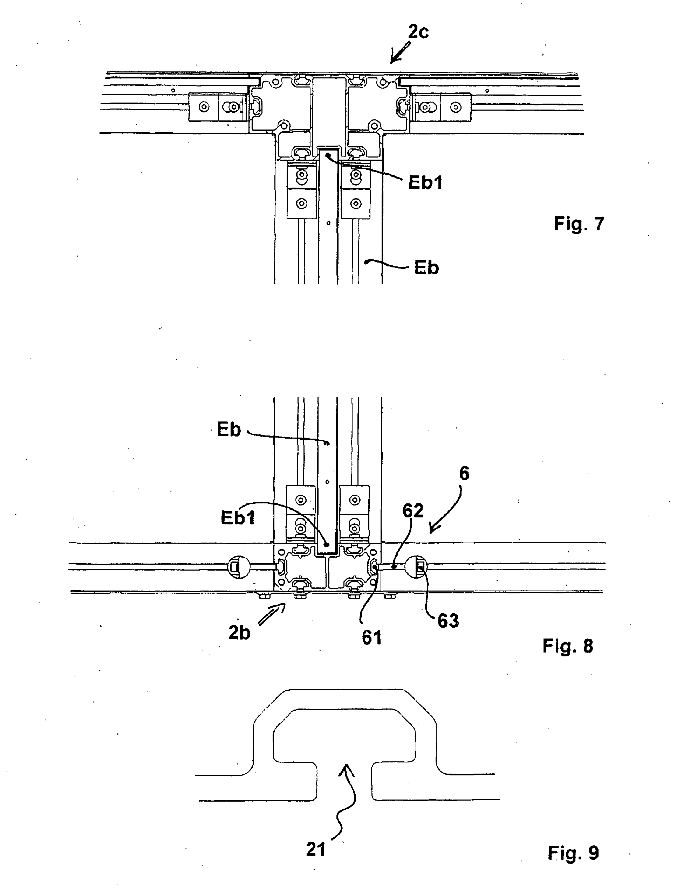

Said bars (2) can have square (2a, Fig. 3) or rectangular (2b, Fig. 8) or T-shaped (2c, Fig. 7) or L-shaped (2d, Fig. 5) cross section, or square cross section with a projecting and thicker side (2e, Fig. 6).

In particular, as shown in Figures 5, 6, 7, 8, said bars (2) comprise seats or cavities (23) in a simple rectangular or square shape for housing the edge of a panel (E).

Furthermore, as shown in detail in Figure 9, said bars (2) comprise seats or cavities (21) in a trapezoidal shape suited to house threaded inserts (31) for connecting two or more bars (2).

The new frame (1) also comprises a plurality of connection elements (3, 4, 5, 6) for coupling together the ends of each bar (2) and one or more bars (2) of the same or a different type without welds. Said connections can be of four types.

As shown in Figures 3a and 3b, the new frame (1) comprises connection elements (5) between said bars (2) and one or more panels comprising fixing screws (51) with washer suited to fix them directly to the thread obtained in a cylindrical seat (24) created within the cross section of the bar.

As shown in Figures 5, 6, 7 and 8, the new frame (1) also comprises connection elements (3) between said bars (2) and one or more panels (D), said connection elements (3) in turn comprising a threaded insert (31) that is inserted in said trapezoidal seat (21) of the bar and a fixing screw (32).

As shown in Figures 3a and 3b, the new frame (1) also comprises connection elements (4) suited to constrain to each other two bars (2) forming, for example, a 90° angle, said connection elements (4) in turn comprising threaded inserts (41), at least one square bracket (42) and fixing screws (43).

As shown in Figure 3b and in Figure 8, the new frame (1) comprises further connection elements (6) suited to constrain to each other two bars (2), for example forming a 90° angle, said connection elements (6) comprising at least one threaded insert (61), one fixing perforated insert (62) and one fixing screw (63). The new frame (1) comprises:
- panels preferably made of stainless steel and with double wall, filled with an insulating foam material. The new frame comprises; in particular, at least two types of panel. Figure 5 shows a panel (Ea) provided with an asymmetrical shaped edge (Eal) for perimeter enclosures. Figures 7 and 8 show a panel (Eb) with symmetrical edge (Eb1) suited to make the inner partitions;
- upper and lower closing panels in steel that are directly fixed to the top of the bar (2) by means of said screws (51), and laterally (D) by means of inserts (31) in said hollow seat (21) in the bar (2) and of fixing screws (32).

Said panels are created by joining two stainless steel half-shells to each other and injecting self-expanding resin in the air gap, thus obtaining panels with a minimum thickness, for example 25 mm. This type of construction makes it possible to obtain strong and light elements with valuable material in contact with the product.

The frame (1) also comprises a two-component glue suitable for joining said steel panels (E, D) to said aluminium bars (2), the bonding agent having the double function of serving as a structural connection element and as a thermal bridge between the inner and outer surfaces of the closing panels. Said perimeter and partitioning panels are in fact constrained to the bars of the structure of the compartments by means of a two-component glue that makes it possible to obtain perfect sealing of the compartments and at the same time makes the entire structure highly stiff and sturdy; furthermore, condensation during the operating stages is eliminated.

According to the invention, furthermore, said frame (1) may comprise fabric finishing elements that are effectively applied to the required points in order to achieve tightness by fitting the aluminium closing profiles in the cavities (21, 23) provided in said bars (2). In this way a perfect finish is guaranteed and it is possible to easily and quickly replace the fabric in case of maintenance.

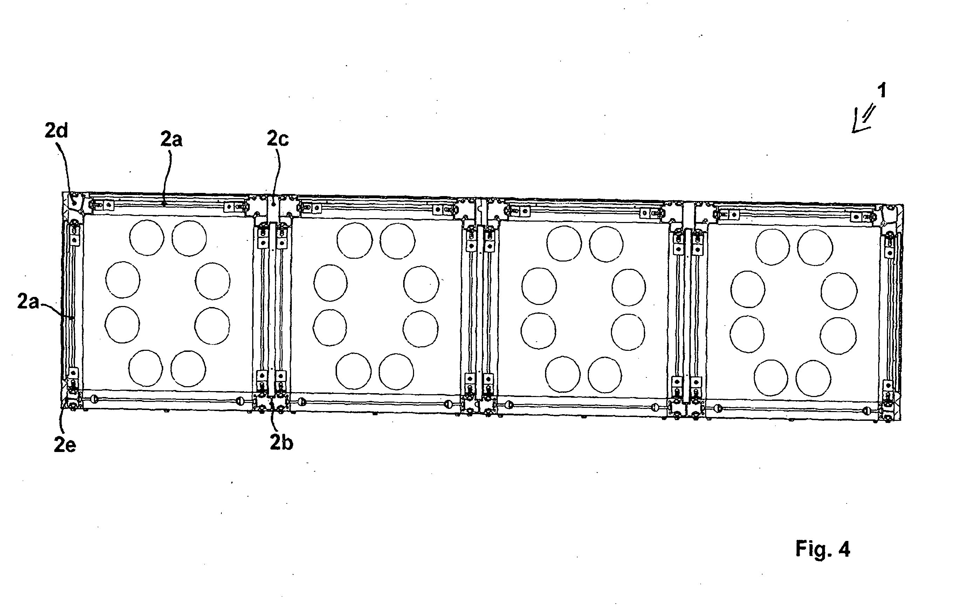

The new frame (1) also comprises:
- a frame pack (B), that is, the assembly of the frames that form a sieving channel consisting of a pile of main frames and corresponding small mesh frames that form the actual sieve. The entire pack is housed inside the structure of the machine and fixed to the latter through suitable locking devices like the upper sieve locking device and the front doors;
- side frame-bearing compartments, as shown in Figure 4, obtained with the linear bars (2) joined at their ends using said connection elements and fixed to the perimeter panels (Ea) and the centre partitions (Eb) with said two-component glue. Finally, said compartments are completed with said steel panels (D) in the upper and lower part. The shape of the side compartments is such as to allow the frame packs, divided in sieving channels, to be housed inside them, each compartment being in the shape of a square-based parallelepiped;
- closing doors (H) that serve for closing the channels that provide for sieving the product and conveying it towards the lower portion of the machine. The parts in contact with the product are made of stainless steel while the outside is made of thermoformed plastic material. The two half shells, made with the two types of material, are joined to each other by welding and filled with insulating foam material, for example self-expanding resin, thus making the door sturdy and light and, therefore, very easy to handle. Furthermore, the stainless steel in the part in contact with the product represents one of the most valuable characteristics of the machine;
- centre body with drive unit (C) making up the part of the machine that transmits motion through an electric motor by setting a suitably sized counterweight rotating around the main axis via a belt transmission. The adjustment of the distance between the centre of gravity of the counterweight (C1) and the axis of the machine makes it possible to increase or reduce the motion amplitude. The structure of the centre body is made of electro welded and painted steel, following a pattern that allows a modular structure to be obtained;
- side suspension bars (F) made of steel and suited to join said side compartments and the centre body. The side bars also have the function of housing the rod fixing clamps (G) for suspending the machine;
- suspension rods and fixing accessories (G) are the elements that make it possible to suspend the machine from the structure of the building where it is housed.

The frame is completely assembled by joining the centre body to the two side sieve-bearing compartments, then the side connection bars are fixed, then the rods are fixed to the latter.

The machine is thus suspended from the bearing structure or building, and the electric motor sets it rotating with a rotary motion that is necessary for sieving the product to be processed.

The new frame also comprises panels for making the external walls and/or the inner partitions, as described and claimed below.

The new frame offers several advantages.

Said hollow bars make it possible to easily carry out the operations for making and assembling the structures of the side sieve-bearing compartments. The cavities provided in said bars also make it possible to fix all the accessories making up the machine, like side connection bars, longitudinal profiles and plates for joining the bodies of which the machine is made, lower and upper covers for closing the sieve-bearing compartments, connection of the frame pack locking device, connection of the door fixing and closing blocks.

Considerable lightness is also guaranteed to the entire structure, though allowing the repeatability of the structural module making up the bodies of the compartments. In fact, the choice of different types of bars with cavities makes it possible to obtain a very light yet sturdy structure. The stiffness of the structure is due to the end joints of the bars but also to the fact that the panels inserted in the bar cavities are fixed with a glue.

The end covers of the compartments are fixed with screws and threaded inserts fitted in the bar cavities, and this guarantees the transversal stiffness of the structures; furthermore, these covers are in any respect removable elements that can be removed and replaced in case of maintenance, repair or modification of the technological process of the machine.

The system for making the structures of the sieve-bearing compartments with longitudinal bars provided with said cavities and said connection elements makes it possible to obtain, with the few types of bars used, modular structures capable of covering a wide range of machine models, quickly satisfying the different needs of customers and with no need to keep costly semi-finished products in stock.

The use of the cavities in the bars and the various fixing systems ensure comfortable and safe machine handling operations during all the stages of its life cycle, that is, construction, on-site assembly for the first installation, disassembly and disposal.

The types of material used, in particular stainless steel and aluminium, allow them to be easily and advantageously recovered and recycled at the end of the machine's life cycle.

The reduced weight of the entire machine compared to the traditional model completely made of electro welded steel allows considerable advantages to be obtained, also in terms of power consumption.

The construction of the side panels and partitions with two stainless steel half shells filled with foam material considerably reduces the noise produced by the machine and allows the product to come into contact with material suitable for use with food products.

Finally, heat insulation between the outside and the inside of the machine is guaranteed and condensation phenomena are avoided.

Another advantage is represented by the modular nature of the new frame: with just two types of model for the centre body and one type of model for the side compartments it is possible to obtain the entire range of sizes available for this machine, with considerable reduction in construction times and costs, and a smaller number of costly semi-finished products to be kept in stock.

Therefore, with reference to the above description and the attached drawings, the following claims are expressed.

## Claims

1. Sectional and modular frame (1) for vibrating sieves (A), said frame (1) comprising a plurality of tubular linear bars (2) suited to be coupled with each other and rigidly constrained to form a substantially parallelepiped three-dimensional structure, and one or more panels (D, E) suited to define the side and/or internal walls of the frame (1), **characterized in that** it comprises:
• said bars (2) having shaped cross section with open seats (21, 23) recessed within its cross section, substantially linear and developing along the entirety or part of the length of the bar (2);
• a plurality of connection elements (3, 4, 5, 6) for coupling together each bar (2) and one or more bars of the same or a different type without welds;
• one or more stainless steel double wall panels (E) filled with insulating foam material and wherein said bars (2) comprise one or more of said seats or cavities (23) in a simple rectangular or square shape suited to house the edge of one or more of said panels (E) and seats or cavities (21) in a trapezoidal shape suited to house threaded inserts (31) for connecting two or more bars (2);
and wherein said steel panels (E, D) are joined to said bars (2) by a two component glue.

2. Sectional and modular frame (1) for vibrating sieves (A) according to claim 1, **characterized in that** said bars (2) have a square cross section (2a) or a rectangular cross section (2b) or a T-shaped cross section (2c) or an L-shaped cross section (2d), or a square cross section with a projecting and thicker side (2e).

3. Sectional and modular frame (1) for vibrating sieves (A) according to claims 1, 2, **characterized in that** it comprises connection elements (5) between said bars (2) and one or more panels comprising fixing screws (51) with washer suited to fix them directly to the thread obtained in a cylindrical seat (24) that is created within the cross section of the bar.

4. Sectional and modular frame (1) for vibrating sieves (A) according to claims 1, 2, 3, **characterized in that** it comprises connection elements (3) between said bars (2) and one or more panels (D), said connection elements (3) in turn comprising a threaded insert (31) that is inserted in said trapezoidal seat (21) of the bar and a fixing screw (32).

5. Sectional and modular frame (1) for vibrating sieves (A) according to claims 1, 2, 3, 4, **characterized in that** it comprises connection elements (4) suited to constrain to each other two bars (2) forming a 90° angle, said connection elements (4) in turn comprising threaded inserts (41), at least one square bracket (42) and fixing screws (43).

6. Sectional and modular frame (1) for vibrating sieves (A) according to claims 1, 2, 3, 4, 5, **characterized in that** it comprises connection elements (6) suited to constrain to each other two bars (2), for example forming a 90° angle, said connection elements (6) comprising at least one threaded insert (61), one fixing perforated insert (62) and one fixing screw (63).

7. Sectional and modular frame (1) for vibrating sieves (A) according to claim 1, **characterized in that** it comprises one or more of said panels (Ea, Eb) suited to create perimeter enclosures or internal partitions, said panels having asymmetrical (Eal) or symmetrical (Eb1) shaped edges.

## Patentansprüche

1. Sektional- und Modulrahmen (1) für Rüttelsiebe (A), wobei der besagte Rahmen (1) eine Vielzahl von röhrenförmigen, linearen Stangen (2) umfasst, die dazu geeignet sind, miteinander gekuppelt und starr verbunden zu werden, um eine im Wesentlichen parallelflache, dreidimensionale Form zu bilden, und ein oder mehrere Paneele (D, E) umfasst, die dazu geeignet sind, die Seiten- und/oder Innenwände des Rahmens (1) zu definieren, **dadurch gekennzeichnet, dass** er Folgendes umfasst:
• die besagten Stangen (2) mit geformtem Querschnitt mit offenen Aufnahmen (21, 23), die innerhalb seines Querschnitts ausgespart sind, die im Wesentlichen linear sind und sich über die Gänze oder über einen Teil der Länge der Stange (2) erstrecken;
• eine Vielzahl von Verbindungselementen (3, 4, 5, 6) zum Zusammenkuppeln jeder Stange (2) und einer oder mehrerer Stangen desselben oder unterschiedlichen Typs ohne Schweißnähte;
• ein oder mehrere, doppelwandige Edelstahlpaneele (E) gefüllt mit Isolierschaumstoff, und wobei die besagten Stangen (2) eine oder mehrere der besagten Aufnahmen oder Hohlräume (23) in einfacher rechteckiger oder quadratischer Form umfassen, die dazu geeignet sind, die Kante eines oder mehrerer der besagten Paneele (E) aufzunehmen, sowie Aufnahmen oder Hohlräume (21) in Trapezform, die geeignet sind, Gewindeeinsätze (31) zur Verbindung von zwei oder mehreren Stangen (2) aufzunehmen,
und wobei die besagten Stahlpaneele (E, D) mittels eines Zweikomponentenklebers mit den besagten Stangen (2) verbunden sind.

2. Sektional- und Modulrahmen (1) für Rüttelsiebe (A) gemäß Patentanspruch 1, **dadurch gekennzeichnet, dass** die besagten Stangen (2) einen quadratischen Querschnitt (2a) oder einen rechteckigen Querschnitt (2b) oder einen T-förmigen Querschnitt (2c) oder einen L-förmigen Querschnitt (2d) oder einen quadratischen Querschnitt mit einer hervorstehenden und dickeren Seite (2e) haben.

3. Sektional- und Modulrahmen (1) für Rüttelsiebe (A) gemäß den Patentansprüchen 1, 2, **dadurch gekennzeichnet, dass** er Verbindungselemente (5) zwischen den besagten Stangen (2) und ein oder mehrere Paneele aufweist, die Befestigungsschrauben (51) mit Unterlegscheibe umfassen, dazu geeignet, sie direkt an dem Gewinde zu befestigen, das in einer zylindrischen, innerhalb des Querschnitts der Stange gowonnenen Aufnahme (24) realisiert ist.

4. Sektional- und Modulrahmen (1) für Rüttelsiebe (A) gemäß den Patentansprüchen 1, 2, 3, **dadurch gekennzeichnet, dass** er Verbindungselemente (3) zwischen den besagten Stangen (2) und ein oder mehrere Paneele aufweist, wobei die besagten Verbindungselemente (3) ihrerseits einen Gewindeeinsatz (31) umfassen, der in die besagte, trapezförmige Aufnahme (21) der Stange eingesetzt ist, sowie eine Befestigungsschraube (32).

5. Sektional- und Modulrahmen (1) für Rüttelsiebe (A) gemäß den Patentansprüchen 1, 2, 3, 4, **dadurch gekennzeichnet, dass** er Verbindungselemente (4) aufweist, die geeignet sind, zwei Stangen (2) aneinander zu befestigen, so daß sie einen 90°-Winkel bilden, wobei die besagten Befestigungselemente (4) Gewindeeinsätze (41), wenigstens einen quadratischen Träger (42) und Befestigungsschrauben (43) umfassen.

6. Sektional- und Modulrahmen (1) für Rüttelsiebe (A) gemäß den Patentansprüchen 1, 2, 3, 4, 5, **dadurch gekennzeichnet, dass** er Verbindungselemente (6) aufweist, die geeignet sind, zwei Stangen (2) aneinander zu befestigen, so daß sie beispielsweise einen 90°-Winkel bilden, wobei die besagten Befestigungselemente (6) wenigstens einen Gewindeeinsatz (61), einen befestigenden, gelochten Einsatz (62) und eine Befestigungsschraube (63) umfassen.

7. Sektional- und Modulrahmen (1) für Rüttelsiebe (A) gemäß Patentanspruch 1, **dadurch gekennzeichnet, dass** er ein oder mehrere der besagten Paneele (Ea, Eb) umfasst, die geeignet sind, Umfangseinfassungen oder interne Aufteilungen zu erzeugen, wobei die besagten Paneele asymmetrisch (Ea1) oder symmetrisch (Eb1) geformte Kanten haben.

## Revendications

1. Châssis (1) par éléments et modulaire pour tamis vibrants (A), ledit châssis (1) comprenant une pluralité de profilés tubulaires linéaires (2), aptes à être accouplés entre eux et bloqués rigidement de façon à réaliser une structure tridimensionnelle essentiellement en parallélépipède, et un ou plusieurs panneaux (D, E) aptes à définir les parois latérales et/ou internes du châssis (1), **caractérisé en ce qu**'il comprend :
• lesdits profilés (2) ayant une section transversale galbée avec des sièges ouverts (21, 23) en retrait dans la section transversale, essentiellement linéaires et se développant le long de toute ou une partie de la longueur du profilé (2) ;
• une pluralité d'éléments de jonction (3, 4, 5, 6) pour la connexion sans soudures entre chaque profilé (2) et un ou plusieurs profilés du même type ou de type différent ;
• un ou plusieurs panneaux sandwich doubles en acier inoxydable (E) remplis avec un matériau de mousse isolante et où lesdits profilés (2) comprennent un ou plusieurs desdits sièges ou cavités (23) en une forme simple rectangulaire ou carrée indiqués pour loger le bord d'un ou plusieurs desdits panneaux (E) et sièges ou cavités (21) en une forme trapézoïdale indiqués pour loger des insertions filetées (31) pour la connexion de deux ou plusieurs profilés (2) ;
et où lesdits panneaux en acier (E, D) sont reliés auxdites profilés (2) par une colle à deux composants.

2. Châssis (1) par éléments et modulaire pour tamis vibrants (A) selon la revendication 1, **caractérisé en ce que** lesdits profilés (2) ont une section transversale carrée (2a) ou une section transversale rectangulaire (2b) ou une section transversale en T (2c), ou une section transversale en L (2d) ou une section transversale carrée avec un côté saillant et plus épais (2e).

3. Châssis (1) par éléments et modulaire pour tamis vibrants (A) selon les revendications 1, 2, **caractérisé en ce qu**'il comprend des éléments de connexion (5) entre lesdits profilés (2) et un ou plusieurs panneaux comprenant des vis de fixation (51) avec une rondelle indiquée pour les fixer directement au filet obtenu dans un siège cylindrique (24) qui est créé à l'intérieur de la section transversale du profilé.

4. Châssis (1) par éléments et modulaire pour tamis vibrants (A) selon les revendications 1, 2, 3, **caractérisé en ce qu**'il comprend des éléments de jonction (3) entre lesdits profilés (2) et un ou plusieurs panneaux (D), lesdits éléments de jonction (3) comprenant à leur tour une insertion filetée (31) qui est insérée dans ledit siège trapézoïdal (21) du profilé et une vis de fixation (32).

5. Châssis (1) par éléments et modulaire pour tamis vibrants (A) selon les revendications 1, 2, 3, 4, **caractérisé en ce qu**'il comprend des éléments de jonction (4) indiqués pour bloquer deux profilés (2) entre eux formant un angle de 90°, lesdits éléments de jonction (4) comprenant à leur tour des insertions filetées (41), au moins une bride en équerre (42) et des vis de fixation (43).

6. Châssis (1) par éléments et modulaire pour tamis vibrants (A) selon les revendications 1, 2, 3, 4, 5, **caractérisé en ce qu**'il comprend des éléments de jonction (6) indiqués pour bloquer deux profilés (2) entre eux, formant par exemple un angle de 90°, lesdits éléments de jonction (6) comprenant au moins une insertion filetée (61), une insertion perforée de fixation (62) et une vis de fixation (63).

7. Châssis (1) par éléments et modulaire pour tamis vibrants (A) selon la revendication 1, **caractérisé en ce qu**'il comprend un ou plusieurs desdits panneaux (Ea, Eb) indiqués pour créer des enceintes de périmètre ou des cloisons internes, lesdits panneaux ayant des bords galbés asymétriques (Ea1) ou symétriques (Eb1).
